# EUROPEAN PATENT SPECIFICATION

(11) **EP 1 338 579 B1**
(45) Date of publication and mention of the grant of the patent: **28.09.2005**
(21) Application number: 03006437.2
(22) Date of filing: 25.06.1996
(51) Int. Cl.: C04B 28/18, C04B 40/02

(54) **Method of manufacturing a calcium silicate board**
Verfahren zur Herstellung einer Calciumsilikatplatte
Méthode de fabrication d'un panneau en silicate de calcium

(43) Date of publication of application: 27.08.2003
(62) Divisional of application: 96918905.9
(73) Proprietor: A & A Material Corporation, Tsurumi-ku, Yokohama-shi (JP)
(72) Inventor: Suzuki, Seishiro, c/o ASK Corp., Yokohama-shi, Kanagawa 230 (JP); Sakiyama, Masato, c/o ASK Corp., Yokohama-shi, Kanagawa 230 (JP); Asami, Takuya, c/o ASK Corp., Yokohama-shi, Kanagawa 230 (JP); Iwanaga, Tomoki, c/o ASK Corp., Yokohama-shi, Kanagawa 230 (JP); Oshio, Yasuhide, c/o ASK Corp., Yokohama-shi, Kanagawa 230 (JP); Shiromoto, Shigemitsu, c/o ASK Corp., Yokohama-shi, Kanagawa 230 (JP); Sugiyama, Toru, c/o ASK Corp., Yokohama-shi, Kanagawa 230 (JP); Oda, Masaaki, c/o ASK Corp., Yokohama-shi, Kanagawa 230 (JP)
(74) Representative: Midgley, Jonathan Lee

(56) References cited:
- EP-A- 0 678 488
- US-A- 4 128 434
- US-A- 4 144 121

## Description

### INDUSTRIAL FIELD OF THE INVENTION

The present invention relates to a method of manufacturing a calcium silicate board and the calcium silicate board obtained by the method.

### RELATED ART AND PROBLEMS

Conventionally, calcium silicate boards have been widely used for building materials, in particular, for interior materials because of such characteristics as being light, excellent in workability and dimensional stability, and non-combustible.

Calcium silicate boards used for building material are formed using a forming process such as the Hatschek sheet machine process a press mold process or a mono-layer mold process and are manufactured as follows: a molded body is formed from a calcareous material, a silica containing material, reinforcing fibers and fillers, such as light-weight aggregate, then, in general, subjected to curing reaction by saturated water vapor in a pressure container. Generally, the bulk specific gravity of the calcium silicate boards is in a range of from 0.7 to 1.2.

Since calcium silicate boards are used as an interior material, such as ceiling materials and wall materials, lightening the boards is desirable, however, according to the above methods it is necessary to mix a considerable amount of light-weight aggregate so as to achieve a bulk specific gravity of 0.5 to 0.8, resulting in a decrease in the specific strength of the boards.

In particular, when a light-weight calcium silicate board having a bulk specific gravity of 1.0 or less is manufactured according to the Hatschek sheet machine process, the following problems sometimes occur: because of the low strength and large water content of the molded body before hydrothermal reaction, the redundant water thermally expands during hydrothermal reaction or the vapor pressure increases, resulting in interlayer peeling or bursting.

To avoid the above problems, in some methods, a molded body is pressed after forming then subjected to hydrothermal reaction or a molded body is tightened by a turn-buckle during the hydrothermal reaction. However, in accordance with these methods, such problems occur that the bulk specific gravity increases and more labor is required for manufacturing.

In addition, Japanese Patent Laid-Open No. 6-287083 discloses a method of removing the redundant water, though this method cannot be commonly used because a specific pressure container or a vapor heater is necessary.

Further, conventionally, a material slurry containing a calcareous material and an amorphous silica containing material is heated at a normal pressure for gelation so as to achieve a light-weight board. However, according to this method, the board strength is inevitably reduced, and further, the material is so soft that it is readily shaved during polishing. Therefore, cellulose fibers become extremely fuzzy such that the surface smoothness is impaired when the board is used after coating.

Moreover, another method is disclosed in Japanese Patent Laid-Open Nos. 52-105926 and 52-135330, wherein calcium silicate boards exhibiting excellent strength are obtained by adding a xontlite slurry, which is a kind of calcium silicate hydrate, or a crystalline calcium slurry. Since productivity decreases according to these methods, improvement is required from a viewpoint of manufacturing costs.

Additionally, in Japanese Patent Laid-Open Nos. 5-213657 and 7-41354, the inventors of the present invention have already disclosed a method of adding both a gelatinized slurry, comprising a calcareous material and an amorphous silica containing material, and a crystalline calcium silicate hydrate slurry. However, in the case of a board laminated by the Hatschek sheet machine process, some problems, such as interlayer peeling or bursting, occur even in this method of adding gels.

Furthermore, Japanese Patent Publication No. 58-30259 discloses a method of manufacturing a calcium silicate molded body characterized by the following: a silica containing material and a calcareous material are dispersed in water of which the amount by weight is 15 times or more than that of the materials as a solid component; the resultant mixture is heat-reacted at 130°C or more under a pressurized condition so as to form an aqueous slurry, which has a sedimentation volume of 15 cm³/g or more, contains calcium silicate composed of C-S-H or tobermorite; to the aqueous slurry asbestos is added and subjected to dewatering and forming; and the calcium silicate hydrate is transformed by water vapor curing under a pressurized condition. However, the calcium silicate molded body obtained by this method is used as a heat storing material or a heat insulating material, and according to an embodiment of this Publication, the bulk specific gravity thereof is as small as 0.1 to 0.2 g/cm³. Thus the calcium silicate molded body cannot be employed for a calcium silicate board used as a building material.

An object of the invention is to provide a method of manufacturing a calcium silicate board having a bulk specific gravity of 0.70 or less using a gel comprising a calcareous material for gelation and a silica containing material for gelation, to give the board an excellent interlayer peel strength. The invention solves the foregoing problems by improving the strength of a molded body by primary curing proceeded before hydrothermal reaction so as to avoid peeling or bursting during the hydrothermal reaction.

The present invention relates to a method of manufacturing a calcium silicate board having a bulk specific gravity of 0.70 or less as defined, in different aspects, in claims 1 and 2.

A method of manufacturing a calcium silicate board according to the present invention will now be described, by way of example.

Calcium hydroxide and quicklime are examples of calcareous material. Silica sand and sintered diatomaceous earth are examples of a crystalline silica containing material. When the Ca/(Si + Al) molar ratio of the foregoing slurry is less than 0.3, effects on decreasing the specific gravity and increasing the matrix strength are undesirably reduced because of a small production amount of calcium silicate hydrate. Whereas if the ratio exceeds 0.8, undesirably, the moisture content is raised because of an increase in sedimentation volume, thus impairing productivity.

In addition, silica sand, flay ash, diatomaceous earth, silicon dust, white carbon, zeolite, and montmorillonite are examples of a silica containing material

Moreover, cellulose fibers, polypropylene, vinylon, glass fibers and carbon fibers are examples of a fiber material.

Further, perlite, wallastonite, mica, talc, calcium carbonate and gypsum are examples of inorganic fillers.

In addition, as a forming method, any conventional forming process, including the Hatschek sheet machine process, mold press process, and mono-layer mold process, can be used.

The fundamental composition of a material slurry used for a method of manufacturing a calcium silicate board according to the invention claimed in the parent application EP-A-0846666 from which this application was divided is a conventional composition, as follows: as a solid component, 17 to 50 wt% of calcareous material, 15 to 45 wt% of silica containing material; 2 to 8 wt% of fiber material; and 5 to 40% of inorganic fillers.

Examples of an amorphous silica containing material having a specific surface area of 1 m²/g or more are diatomaceous earth, silicon dust, fly ash, and white carbon. Additionally, examples of a silicate material having a specific surface are of 1 m²/g or more are zeolite, pyrophyllite, allophane, montmorillonite mineral, chlorite mineral, and attapulgite. Two or more kinds of these materials can be used together.

A characteristic of the present invention is that a green sheet (molded body) is not subjected to the hydrothermal reaction as it is but undergoes primary curing, which green sheet is obtained such that a material slurry composed of the foregoing material compositions is formed into a prescribed shape by, for instance, the Hatschek sheet machine process.

After the aforementioned primary curing, the green sheet may be subjected to a conventional hydrothermal reaction and formed into a calcium silicate board through conventional processes. The hydrothermal reaction can proceed in a pressure container under saturated water vapor at a temperature of 150 to 200°C and, preferably at 170 to 190°C for 5 to 20 hours and, more preferably, for 8 to 12 hours.

A calcium silicate board having a bulk specific gravity of 1.0 or less can be obtained.

The fundamental composition of a material slurry used for a method of manufacturing a calcium silicate board according to the present invention is a conventional composition, as follows: 5 to 35 wt% of calcareous material, 5 to 40 wt% of silica containing material; 2 to 8 wt% of fiber material; 5 to 40% of inorganic fillers, and a gel obtained from 2 to 20 wt% of calcareous material for gelation and 3 to 25 wt% of silica containing material for gelation. In addition, the foregoing material slurry may contain a curing agent up to 20 wt%.

The same materials as above mentioned can be used as a calcareous material. A calcareous material content of less than 5 wt% or more than 35 wt% is not preferable because it causes a decrease in the flexural strength and an increase in the dimensional change rate due to water absorption.

In addition, silica sand, fly ash, etc., can be used as a silica containing material. A silica containing material content of less than 5wt% or more than 40wt% is not preferable because it causes a decrease in the flexural strength and an increase in the dimensional change rate due to water absorption.

Moreover, the same materials as above mentioned can be used as a fiber material. A fiber material content of less than 2wt% is not preferable because it decreases the flexural strength, and a fiber material content of more than 8wt% undesirably causes a loss of non-combustibility. Additionally, when polypropylene, vinylon, glass fibers or carbon fibers are used, it is necessary to set the content thereof to 5wt% or less.

Further, the same materials as above can be used as inorganic fillers. An inorganic filler content of less than 5wt% is not preferable because it causes an increase in the dimensional change rate due to water absorption. An inorganic filler content of more than 40wt% is not preferable, since it decreases the flexural strength.

According to the first aspect of the present invention, an amorphous silica containing material and/or a silicate material of which the specific area is 1 m²/g or more is used as a portion of a silica containing material of a material slurry having the foregoing composition.

The content of an amorphous silica containing material or a silicate material of which the specific surface area is 1 m²/g or more is in a range of from 2 to 20wt%.

The same material as above can be used as an amorphous silica containing material having a specific surface area of 1 m²/g or more.

It is essential to use a gel obtained by gelation of 2 to 20wt% of calcareous material for gelation and 3 to 25wt% of silica containing material for gelation, for instance, at 75 to 95°C for 1.5 to 4 hours. A calcium silicate board having a bulk specific gravity of 0.7 or less can be readily obtained by using the foregoing gel for a material slurry for producing the calcium silicate board. Neither the calcareous material for gelation nor the silica containing material for gelation are limited to specific kinds of materials and any conventional material can be used. For example, calcium hydroxide and quicklime can be used as a calcareous material for gelation. Silicon dust, fly ash, white carbon and the like can be used as a silica containing material for gelation.

Moreover, a curing agent may be added to a material slurry according to the second aspect of the present invention. For example, Portland cement, alumina cement and granulated blastfurnace slag can be used as a curing agent for improving the flexural strength by primary curing. When using a curing agent, the content thereof is 20 wt% or less and, preferably, in a range of from 3 to 20 wt%. When the content exceeds 20 wt%, the bulk specific gravity of a calcium silicate board increases and, undesirably, it becomes impossible to produce a calcium silicate board having a bulk specific gravity of 0.70 or less. If the content is less than 3 wt%, the effect of adding a curing agent is occasionally impeded.

According to the present invention, a material slurry of the above kind is formed in layers e.g. by the Hatschek sheet machine process, which slurry has a gel as a portion thereof, contains or does not contain an amorphous silica containing material or a silicate material having a specific surface area of 1 m²/g or more, and contains or does not contain a curing agent. The present invention is not limited to this Hatschek sheet machine process, and any conventional process can be used.

The novel characteristic of the present invention is that a molded body obtained in the above manner is not subjected to the hydrothermal reaction as it is but undergoes primary curing. If the material slurry does not contain a curing agent, primary curing proceeds under the following conditions: (curing temperature - 15) x curing time ≥120°C.hr. The primary curing conditions of less than 120°C.hr. are not preferable because a molded body cannot obtain sufficient strength due to a shortage of curing. Primary curing requires a curing temperature of 15°C or more and, preferably, it proceeds under conditions of 240°C.hr. or more in a curing temperature range of 30 to 80°C. Further, when the material slurry contains a curing agent, primary curing can proceed under the following conditions: (curing temperature - 10) x curing time ≥120°C.hr. This is because the reaction using a curing agent readily proceeds at a low temperature as compared with a calcareous material and silica containing material, in particular, an amorphous silica containing material and silicate material. In this case, primary curing requires a curing temperature of 10°C or more and, preferably, it proceeds under conditions of 240°C.hr or more in a curing temperature range of 25 to 80°C.

By employing the above-mentioned primary curing it is possible to increase the flexural strength of a molded body under wet conditions to 7 kg/cm² or more and to 1.3 times higher than that before primary curing.

After the aforementioned primary curing, the molded body can be subjected to a conventional hydrothermal reaction and formed into a calcium silicate board through conventional processes. The hydrothermal reaction can proceed in a pressure container under saturated water vapour at a temperature of 150 to 200°C and, preferably at 170 to 190°C for 5 to 20 hours and, more preferably, for 8 to 12 hours.

According to this manufacturing method, a calcium silicate board having a bulk specific gravity of 0.70 or less is obtained and significantly it reveals an excellent interlayer peel strength (under absolute dry conditions) which is 3% or more of the flexural strength (under absolute dry conditions). In this case, the flexural strength is evaluated according to JIS A5418 using a No. 3 test piece, and a 30 by 30 mm test piece is employed in the interlayer peel test.

### EXAMPLES

A method of manufacturing a calcium silicate board according to the present invention will be better understood in detail from the following description taken in conjunction with Table 1.

Each of the materials prepared according to formulations shown in Table 1 was mixed with 12 times the amount of water and stirred. The gel used here was obtained by gelation of calcium hydroxide and diatomaceous earth at a weight ratio of 1:1, which gelatin proceeded at a water ratio of 5 for 2 hours at 90°C. In the Table, the gel content is shown as a solid component.

By further adding water thereto, material slurries of which the solid content was approximately 3wt% were obtained and formed into 6 mm thick sheets by the Hatschek sheet machine process.

Then, each of the resultant green sheets was subjected to primary curing according to the conditions, i. e., the temperature and time, shown in Table 1, followed by a hydrothermal reaction in a pressure container for 10 hours at 180°C under a saturated vapor pressure.

Table 1 shows the flexural strength of molded bodies immediately after primary curing, the bulk specific gravity, the flexural strength, and interlayer peel strength after the hydrothermal reaction, wherein the latter two are evaluated under absolute dry conditions.

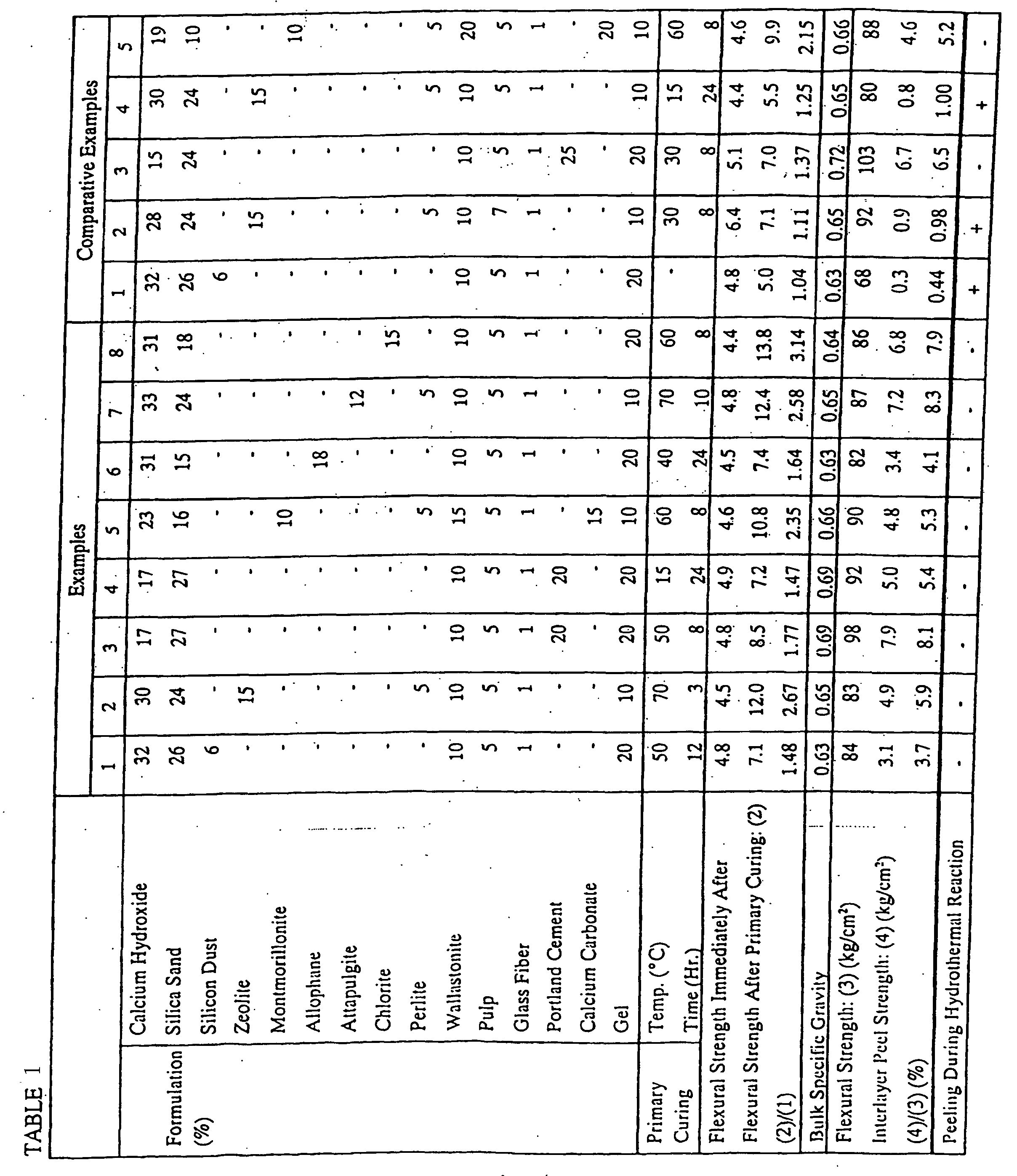

In Table 4, the specific surface area estimated by the gaseous N₂ absorption method is 20 m²/g for silicon dust, 6.5 m²/g for zeolite, and 2.0 m²/g for diatomaceous earth.

### ADVANTAGES

By a method of manufacturing a calcium silicate board according to the present invention, it is possible to improve the strength of the green sheet obtained by forming a material slurry into a prescribed shape. The green sheet is thereby prevented from peeling, bursting or the like during the hydrothermal reaction and the interlayer peel strength of the obtained calcium silicate board having a bulk specific gravity of 0.70 or less is improved.

## Claims

1. A method of manufacturing a calcium silicate board having a bulk specific gravity of 0.70 or less comprising:
a step of forming a material slurry in layers, said material slurry comprising, as a solid component, 5 to 35 wt% of calcareous material, 5 to 40 wt% of silica containing material, 2 to 8 wt% of fiber material, 5 to 40 wt% of inorganic fillers, and a gel obtained from 2 to 20 wt% of calcareous material for gelation and 3 to 25 wt% of silica containing material for gelation; and
a step of a hydrothermally reacting the obtained molded body in a pressure container, wherein 2 to 20 wt% of at least one kind of amorphous silica containing material and/or silicate material, each having a specific surface area of 1 m²/g or more, is used as a portion of said silica containing material;
and, before said hydrothermal reaction, said molded body is subjected to primary curing under conditions where (curing temperature - 15) x curing time ≥ 120°C.hr. so that the flexural strength of said molded body under a wet condition is 7 kg/cm² or more and is 1.3 times higher than that before primary curing.

2. A method of manufacturing a calcium silicate board having a bulk specific gravity of 0.70 or less comprising:
a step of forming a material slurry in layers, said material slurry comprising, as a solid component, 5 to 35 wt% of calcareous material, 5 to 40 wt% of silica containing material, 2 to 8 wt% of fiber material, 5 to 40% of inorganic fillers, and a gel obtained from 2 to 20 wt% of calcareous material for gelation and 3 to 25 wt% of silica containing material for gelation; and
a step of a hydrothermally reacting the obtained molded body in a pressure container,
wherein said material slurry contains 20 wt% or less of a curing agent selected from the group consisting of Portland cement, alumina cement and granulated blastfurnace slag; and, before said hydrothermal reaction, said molded body is subjected to primary curing under conditions where (curing temperature - 10) x curing time ≥ 120°C.hr. so that the flexural strength of said molded body under a wet condition is 7 kg/cm² or more and is 1.3 times higher than that before primary curing.

3. A method according to claim 2, in which 2 to 20 wt% of at least one kind of amorphous silica containing material and/or silicate material, each having a specific surface area of 1 m²/g or more, is used as a portion of said silica containing material.

4. A method according to claim 1, 2 or 3, using the Hatschek sheet machine process to form the material slurry in layers.

## Patentansprüche

1. Verfahren zur Herstellung einer Calciumsilicatplatte mit einer relativen Massendichte von 0,70 oder weniger, das aufweist:
einen Schritt zur schichtweisen Bildung einer Materialaufschlämmung, wobei die Materialaufschlämmung als Feststoffkomponente 5 bis 35 Gew.-% kalkhaltiges Material, 5 bis 40 Gew.-% siliciumdioxidhaltiges Material, 2 bis 8 Gew.-% Fasermaterial, 5 bis 40 Gew.-% anorganische Füllstoffe und ein Gel aufweist, das aus 2 bis 20 Gew.-% kalkhaltigem Gelbildungsmaterial und 3 bis 25 Gew.-% siliciumdioxidhaltigem Gelbildungsmaterial gewonnen wird; und
einen Schritt zur hydrothermalen Reaktion des erhaltenen Formkörpers in einem Druckbehälter, wobei 2 bis 20 Gew.-% mindestens einer Art von amorphem siliciumdioxidhaltigem Material und/oder Silicatmaterial, jeweils mit einer spezifischen Oberfläche von mindestens 1 m²/g, als Anteil des siliciumdioxidhaltigen Materials eingesetzt werden;
und wobei vor der hydrothermalen Reaktion der Formkörper einer Primäraushärtung unter Bedingungen mit (Aushärtungstemperatur - 15) × Aushärtungszeit ≥ 120°C·h ausgesetzt wird, so daß die Biegefestigkeit des Formkörpers in nassem Zustand 7 kg/cm² oder mehr beträgt und 1,3 mal höher ist als vor der Primäraushärtung.

2. Verfahren zur Herstellung einer Calciumsilicatplatte mit einer relativen Massendichte von 0,70 oder weniger, das aufweist:
einen Schritt zur schichtweisen Bildung einer Materialaufschlämmung, wobei die Materialaufschlämmung als Feststoffkomponente 5 bis 35 Gew.-% kalkhaltiges Material, 5 bis 40 Gew.-% siliciumdioxidhaltiges Material, 2 bis 8 Gew.-% Fasermaterial, 5 bis 40 Gew.-% anorganische Füllstoffe und ein Gel aufweist, das aus 2 bis 20 Gew.-% kalkhaltigem Gelbildungsmaterial und 3 bis 25 Gew.-% siliciumdioxidhaltigem Gelbildungsmaterial gewonnen wird; und
einen Schritt zur hydrothermalen Reaktion des erhaltenen Formkörpers in einem Druckbehälter,
wobei die Materialaufschlämmung höchstens 20 Gew.-% eines Aushärtungsmittels enthält, das aus der Gruppe ausgewählt ist, die aus Portlandzement, Tonerdezement und granulierter Hochofenschlacke besteht, und wobei vor der hydrothermalen Reaktion der Formkörper einer Primäraushärtung unter Bedingungen mit (Aushärtungstemperatur - 10) × Aushärtungszeit ≥ 120°C·h ausgesetzt wird, so daß die Biegefestigkeit des Formkörpers in nassem Zustand 7 kg/cm² oder mehr beträgt und 1,3 mal höher ist als vor der Primäraushärtung.

3. Verfahren nach Anspruch 2, wobei 2 bis 20 Gew.-% mindestens einer Art von amorphem siliciumdioxidhaltigem Material und/oder Silicatmaterial, jeweils mit einer spezifischen Oberfläche von mindestens 1 m²/g, als Anteil des siliciumdioxidhaltigen Materials eingesetzt werden.

4. Verfahren nach Anspruch 1, 2 oder 3 mit Anwendung des Hatschekschen Plattenformmaschinenverfahrens zum schichtweisen Formen der Materialaufschlämmung.

## Revendications

1. Procédé de fabrication d'un panneau en silicate de calcium ayant une densité apparente de 0,70 ou moins, comprenant:
une étape consistant à façonner une suspension de matériaux en couches, ladite suspension de matériaux comprenant, en tant que constituant solide, 5 à 35% en poids de matériau calcaire, 5 à 40% en poids de matériau contenant de la silice, 2 à 8% en poids de matériau fibreux, 5 à 40% en poids de charges minérales, et un gel obtenu à partir de 2 à 20% en poids de matériau calcaire pour la gélification et 3 à 25% en poids de matériau contenant de la silice pour la gélification; et
une étape consistant à faire réagir hydrothermiquement le corps moulé obtenu dans un récipient sous pression, dans laquelle 2 à 20% en poids d'au moins une sorte de matériau contenant de la silice amorphe et/ou de matériau silicate, chacun ayant une surface spécifique de 1m²/g ou plus, sont utilisés en tant que partie dudit matériau contenant de la silice;
et, avant ladite réaction hydrothermique, ledit corps moulé est soumis à un durcissement primaire dans des conditions où (température de durcissement - 15) x temps de durcissement ≥120°C·h, de sorte que la résistance à la flexion dudit corps moulé dans une condition humide est de 7kg/cm² ou plus et est 1,3 fois plus élevée que celle précédant le durcissement primaire.

2. Procédé de fabrication d'un panneau en silicate de calcium ayant une densité apparente de 0,70 ou moins, comprenant:
une étape consistant à façonner une suspension de matériaux en couches, ladite suspension de matériaux comprenant, en tant que constituant solide, 5 à 35% en poids de matériau calcaire, 5 à 40% en poids de matériau contenant de la silice, 2 à 8% en poids de matériau fibreux, 5 à 40% en poids de charges minérales, et un gel obtenu à partir de 2 à 20% en poids de matériau calcaire pour la gélification et 3 à 25% en poids de matériau contenant de la silice pour la gélification; et
une étape consistant à faire réagir hydrothermiquement le corps moulé obtenu dans un récipient sous pression;
dans lequel ladite suspension de matériaux contient 20% en poids ou moins d'un agent durcisseur choisi dans le groupe constitué par le ciment Portland, le ciment alumineux et le laitier granulé de haut fourneau; et, avant ladite réaction hydrothermique, ledit corps moulé est soumis à un durcissement primaire dans des conditions où (température de durcissement - 10) x temps de durcissement ≥120°C·h, de sorte que la résistance à la flexion dudit corps moulé dans une condition humide est de 7kg/cm² ou plus et est 1,3 fois plus élevée que celle précédant le durcissement primaire.

3. Procédé selon la revendication 2, dans lequel 2 à 20% en poids d'au moins une sorte de matériau contenant de la silice amorphe et/ou de matériau silicate, chacun ayant une surface spécifique de 1m²/g ou plus, sont utilisés en tant que patrie dudit matériau contenant de la silice.

4. Procédé selon la revendication 1, 2 ou 3, utilisant le procédé à machine à feuilles Hatschek pour façonner la suspension de matériaux en couches.
